# EUROPEAN PATENT SPECIFICATION

(11) **EP 1 925 446 B1**
(45) Date of publication and mention of the grant of the patent: **10.03.2010**
(21) Application number: 07301582.8
(22) Date of filing: 26.11.2007
(51) Int. Cl.: B32B 27/32

(54) **Heat shrinkable multi-layer film and method for preparing the same**
Wärmeschrumpfbare, mehrschichtige Folie und Herstellungsverfahren dafür
Film multicouche thermorétrécissable et son procédé de préparation

(30) Priority: 27.11.2006 JP 2006318827
(43) Date of publication of application: 28.05.2008
(73) Proprietor: C.I. KASEI CO., LTD, Chuo-ku Tokyo (JP)
(72) Inventor: Shima, Noriyuki, HYOGO-KEN (JP)
(74) Representative: Vuillermoz, Bruno

(56) References cited:
- EP-A- 0 301 773
- WO-A-98/52749
- US-A1- 2004 072 002
- DATABASE WPI Week 199952 Derwent Publications Ltd., London, GB; AN 1999-604282 XP002470630 & JP 11 262981 A (GUNZE KK) 28 September 1999 (1999-09-28)

## Description

### BACKGROUND OF THE INVENTION

### Field of the Invention

The present invention relates to a heat shrinkable multi-layer film used for labels of bottles or the like, and a method for preparing the same.

### Description of the Related Art

Generally, the body of a bottle for beverages or seasonings is attached with a label composed of a heat shrinkable film.

As a method for attaching a label to the body of a bottle, a method in which a printed heat shrinkable film is cut to a predetermined length, and the ends of the cut film are adhered by solvent sealing to give a tubular-shaped product, and the body of the bottle is inserted into the tubular-shaped product and then heated to shrink the heat shrinkable film, is usually employed. The term solvent sealing as used herein means a sealing process in which the surface of one end of a film is applied with a solvent to dissolve, and the other end of the film is brought into contact with the dissolved portion for adhesion by drying the film.

As a film for which solvent sealing is applied, those that are dissolved in a solvent with hardly reduced in strength even after the application of the solvent, are used. As such a film, a heat shrinkable multi-layer film which includes an intermediate layer containing polyolefin with high solvent resistance, and outer layers containing a styrene-based resin with high solvent solubility, is disclosed (refer to Patent Documents 1 and 2).
[Patent Document 1] Japanese Unexamined Patent Application, First Publication No. Hei 6-23890
[Patent Document 2] Japanese Patent Publication No. 3286594

Here, the compatibility between polyolefin and a styrene-based resin is low. Accordingly, in the thermoplastic multi-layer film as described in Japanese Unexamined Patent Application Publication No. 6-23890 and Japanese Patent No. 3286594, an adhesive such as polyurethane or anhydrous maleic acid-modified, ultra-low-density polyethylene is used to bond the outer layers containing polyolefin and an intermediate layer containing a styrene-based resin. However, if such an adhesive was used, there may occur problems such as reduced workability and increased cost.

US 2004 007 2002 describes heat-shrinkable multilayer films comprising a base layer based on polypropylene and at least are outer layer comprising a styrene resin and polypropylene.

### SUMMARY OF THE INVENTION

The present invention has been made under these circumstances. The object of the invention is to provide a heat shrinkable multi-layer film, in which solvent sealing can be applied for the film, the strength is ensured even after carrying out solvent sealing, and outer layers and an intermediate layer are bonded without using an adhesive. Another object of the invention is to provide a method for preparing such a heat shrinkable multi-layer film.

The present invention includes the following constitutions.

A first aspect of the present invention provides a heat shrinkable multi-layer film having an intermediate layer containing polypropylene, and outer layers formed on both sides of the intermediate layer, in which the outer layers contain i) a styrene-butadiene-styrene block copolymer, ii) polypropylene, and iii) a styrene-ethylene-propylene-styrene block copolymer or styrene-ethylene-butylene-styrene block copolymer.

A second aspect of the present invention provides a heat shrinkable multi-layer film according to the first aspect in which the intermediate layer is an expanded layer.

A third aspect of the present invention provides a method for preparing a heat shrinkable multi-layer film, where the method includes forming a laminate including a first layer, and second layers disposed on both sides of the first layer by coextrusion; and stretching the laminate, in which the first layer is formed of a resin composition for forming an intermediate layer containing polypropylene, and the second layers are formed of a resin composition for forming an outer layer containing i) a styrene-butadiene-styrene block copolymer, ii) polypropylene, and iii) a styrene-ethylene-propylene-styrene block copolymer or styrene-ethylene-butylene-styrene block copolymer.

For the heat shrinkable multi-layer film of the present invention, solvent sealing can be applied, the strength of the film is ensured even after carrying out solvent sealing, and outer layers and an intermediate layer are bonded without using an adhesive.

According to the method for preparing the heat shrinkable multi-layer film of the present invention, the above-described heat shrinkable multi-layer film can be easily produced.

### BRIEF DESCRIPTION OF THE DRAWING

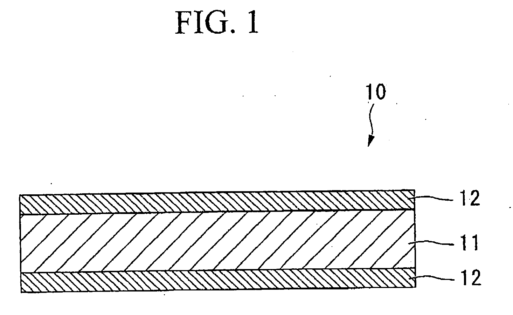

FIG. 1 is a cross-sectional view illustrating an embodiment of the heat shrinkable multi-layer film of the present invention.

### DETAILED DESCRIPTION OF THE INVENTION

### <Heat shrinkable multi-layer Film>

One embodiment of the heat shrinkable multi-layer film of the present invention is now described.

FIG. 1 shows a heat shrinkable multi-layer film according to the present embodiment. The heat shrinkable multi-layer film 10 includes an intermediate layer 11, and outer layers 12 formed on both sides of the intermediate layer 11.

### (Intermediate Layer)

The intermediate layer 11 is a layer containing polypropylene. Examples of polypropylene include homopolypropylene, an ethylene-propylene block copolymer, an ethylene-propylene random copolymer, an ethylene-propylene-butene copolymer, and a pxopylene-butene copolymer. Among these, homopolypropylene is preferred, since it ensures sufficient strength.

Further, the polypropylene may be the one produced by using any catalyst selected from a Ziegler-Natta catalyst, a magnesium chloride-supported titanium catalyst, and a metallocene catalyst.

The intermediate layer 11 may contain additional resins other than the polypropylene. Examples of the additional resins include polybutene, an ionomer resin, a petroleum resin, and the like.

The content of the polypropylene in the intermediate layer 11 is preferably 50 to 100% by mass, more preferably 60 to 90% by mass. If the content of the polypropylene is less than 50% by mass, the strength of the heat shrinkable multi-layer film 10 may be reduced.

The intermediate layer 11 may be an expanded layer. If the intermediate layer 11 is an expanded layer, the heat shrinkable multi-layer film 10 has a heat insulating property, and thus is suitable for a label of a bottle for heated beverages.

If the intermediate layer 11 is an expanded layer, the expansion ratio is preferably 1.3 to 4.5 times, and more preferably 1.5 to 3.5 times. If the expansion ratio is less than 1.3 times, the heat insulating property tends to be lowered. If the expansion ratio is more than 4.5 times, the smoothness of the heat shrinkable multi-layer film 10 tends to be lowered. The "expansion ratio" as used herein is a value represented by D/d, where D is a density of a layer obtained by molding a resin without the use of an expanding agent, and d is a density of a layer obtained by molding the same resin with the use of an expanding agent.

If the intermediate layer 11 is an expanded layer, the thickness thereof is preferably 40 to 200 µm, more preferably 60 to 170 µm. If the intermediate layer 11 is a non-expanded layer, the thickness thereof is preferably 20 to 80 µm, more preferably 25 to 50 µm. If the thickness of the intermediate layer 11 is equal to or above the lower limit, the solvent resistance is increased and reduction in the strength after solvent sealing can be prevented. If the thickness of the intermediate layer 11 is equal to or below the upper limit, reduction in the flexibility of the heat shrinkable multi-layer film 10 can be prevented.

### (Outer Layer)

The outer layer 12 is a layer containing i) a styrene-butadiene-styrene block copolymer, ii) polypropylene, and iii) a styrene-ethylene-propylene-styrene block copolymer or a styrene-ethylene-butylene-styrene block copolymer.

The outer layer 12 may be an expanded layer or a non-expanded layer.

Here, the styrene-butadiene-styrene block copolymer is one for providing solvent sealability to the heat shrinkable multi-layer film 10. The styrene-butadiene-styrene block copolymer preferably has a content of the butadiene units of 10 to 50% by mass. If the content of the butadiene units is 10 to 50% by mass, suitable heat shrinkability can be ensured.

The polypropylene is used to increase the adhesion strength with the intermediate layer 11. Examples of polypropylene include the same as those that constitute the intermediate layer 11.

The styrene-ethylene-propylene-styrene block copolymer is a hydrogenated product of a styrene-isoprene-styrene block copolymer, and the styrene-ethylene-butylene-styrene block copolymer is a hydrogenated product of a styrene-butadiene-styrene block copolymer. These each function as a compatibilizer that compatibilizes the styrene-butadiene-styrene block copolymer and polypropylene.

For the outer layer 12, the content of the styrene-butadiene-styrene block copolymer is preferably 30 to 85% by mass, more preferably 40 to 85% by mass. If the content of the styrene-butadiene-styrene block copolymer is 30% by mass or more, solvent sealing is easily carried out. If the content of the styrene-butadiene-styrene block copolymer is 85% by mass or less, the adhesion strength with the intermediate layer 11 can be increased.

The content of polypropylene is preferably 10 to 40% by mass, more preferably 10 to 35% by mass. If the content of polypropylene is 10% by mass or more, the adhesion strength with the intermediate layer 11 can be increased. If the content of polypropylene is 40% by mass or less, solvent sealing is easily carried out.

The content of the styrene-ethylene-propylene-styrene block copolymer or styrene-ethylene-butylene-styrene block copolymer is preferably 5 to 40% by mass, more preferably 5 to 30% by mass. If the content of the styrene-ethylene-propylene-styrene block copolymer or styrene-ethylene-butylene-styrene block copolymer is 5 to 40% by mass, the compatibility between the styrene-butadiene-styrene block copolymer and polypropylene can be increased.

Further, the outer layer 12 preferably includes a styrene-methacrylic acid copolymer as this can prevent shrinkage at a low temperature. If the styrene-methacrylic acid copolymer is contained, the content thereof is preferably 5 to 50% by mass. If the content of the styrene-methacrylic acid copolymer is 5% by mass or more, shrinkage at a low temperature can be sufficiently prevented. If the content of the styrene-methacrylic acid copolymer is 50% by mass or less, sufficient solvent sealability, and the adhesion strength with the intermediate layer 11 can be sufficiently ensured.

If the intermediate layer 11 is an expanded layer, the thickness of the outer layer 12 is preferably 5 to 20 µm, more preferably 5 to 15 µm. If the intermediate layer 11 is a non-expanded layer, the thickness of the outer layer 12 is preferably 2 to 10 µm, more preferably 2 to 5 µm. If the thickness of the outer layer 12 is no less than the lower limit, the adhesive property due to solvent sealing can be increased. If the thickness of the outer layer 12 is no more than the upper limit, reduction in the flexibility of the heat shrinkable multi-layer film 10 can be prevented.

The heat shrinkage rate of the heat shrinkable multi-layer film 10 is preferably 15% or more in a direction of main shrinkage, and 12% or less in a direction orthogonal to the direction of main shrinkage at the same time, as measured by immersing the film in a hot water bath at 100°C for 30 seconds. The heat shrinkage rate is more preferably 20% or more in a direction of main shrinkage, and 10% or less in a direction orthogonal to the direction of main shrinkage at the same time. If the heat shrinkage rate of the heat shrinkable multi-layer film 10 is 20% or more in a direction of main shrinkage, and 12% or less in a direction orthogonal to the direction of main shrinkage at the same time, the heat shrinkable multi-layer film 10 can be easily attached to the body of a bottle or the like by heat shrinkage.

In the outer layer 12 of the above-described heat shrinkable multi-layer film 10, a styrene-ethylene-propylene-styrene block copolymer or styrene-ethylene-butylene-styrene block copolymer is used as a compatibilizer to compatibilize a styrene-butadiene-styrene block copolymer and polypropylene. Since the styrene-butadiene-styrene block copolymer contained in the outer layer 12 has solvent solubility, solvent sealing can be applied for the heat shrinkable multi-layer film 10, which also has excellent printability.

Moreover, since the outer layer 12 contains polypropylene, the adhesion strength with the intermediate layer 11 containing polypropylene is increased. Accordingly, by applying coextrusion in the preparation of the heat shrinkable multi-layer film 10, the intermediate layer 11 is bonded with the outer layer 12 without the use of an adhesive.

Furthermore, since the intermediate layer 11 of heat shrinkable multi-layer film 10 contains polypropylene with high solvent resistance, solvents hardly penetrate into the film when solvent sealing is carried out. As a result, the strength of the heat shrinkable multi-layer film 10 is ensured even after carrying out solvent sealing.

In addition, since the intermediate layer 11 contains polypropylene, it has high heat resistance and strength. A layer obtained by expanding this intermediate layer 11 can maintain its shape after heating, and thus is suitable for a heat insulating layer.

The above-described heat shrinkable multi-layer film 10 is favorably used as a label to be attached on the body of a bottle.

In order to attach the label to the body of a bottle, first, a heat shrinkable film that has been cut to a predetermined length is made into a tubular-shaped product by solvent sealing. Examples of the solvent used for solvent sealing include an aliphatic hydrocarbon-based solvent such as n-hexane and n-pentane; an alicyclic hydrocarbon-based solvent such as cyclohexane; and an aromatic hydrocarbon-based solvent such as toluene, xylene, and benzene. Among these, a mixed solvent of cyclohexane and n-hexane is preferred due to an easy solvent sealing.

The body of a bottle is inserted into the tubular-shaped product obtained in the above manner, and heated to shrink the heat shrinkable multi-layer film 10, thereby a label composed of the heat shrinkable multi-layer film 10 can be attached onto the body of the bottle.

### <Method for preparing heat shrinkable multi-layer film>

Next, one embodiment of a method for preparing the heat shrinkable multi-layer film 10 is described.

The heat shrinkable multi-layer film 10 is prepared by coextrusion and stretching. Specifically, a resin composition for forming an intermediate layer containing polypropylene is first prepared. A resin composition for forming an outer layer containing a styrene-butadiene-styrene block copolymer, polypropylene, and a styrene-ethylene-propylene-styrene block copolymer or styrene-ethylene-butylene-styrene block copolymer is then prepared.

Next, by means of a coextruder for forming a three-layer structure, a laminate is prepared including a first layer formed of a resin composition for forming an intermediate layer, and second layers formed of a resin composition for forming an outer layer and are disposed on both sides of the first layer.

Next, by using a uniaxial or biaxial stretcher, the laminate is stretched to obtain the heat shrinkable multi-layer film 10 composed of the first layer as the intermediate layer 11, and the second layers as the outer layers 12.

In this preparation method, a tubular sheet may be coextruded from a circular die to prepare a laminate and the laminate may be stretched into a tubular shape. Alternatively, a tubular sheet may be cut into a flat shape and then be stretched as described above.

If the intermediate layer 11 is an expanded layer, for example, a method in which the first layer is incorporated with gas such as an inert gas or hydrocarbon, or a method in which the first layer is incorporated with an inorganic expanding agent such as ammonium carbonate and sodium bicarbonate, a heat-decomposable expanding agent such as an nitroso-based expanding agent and an azo-based expanding agent, or the like, may be applied. The first layer that is incorporated with the above-described gas or expanding agent can be made into an expanded layer by co-extrusion of the first layer.

In this preparation method, both of the resin composition for forming an intermediate layer that would form the intermediate layer 11 and the resin composition for forming an outer layer that would form the outer layer 12 contain polypropylene. For this reason, by coextrusion of these layers, an intermediate layer 11 containing polypropylene and the outer layer 12 containing a styrene-based resin can be easily bonded without the use of an adhesive. Accordingly, by this preparation method, the heat shrinkable multi-layer film 10 composed of the intermediate layer 11 containing polypropylene and the outer layer 12 containing a styrene-based resin can be easily prepared.

### Examples

### Example 1

75 parts by mass of polypropylene (manufactured by Japan Polypropylene Corporation), 25 parts by mass of a petroleum resin (Arkon P140, manufactured by Arakawa Chemical Industries, LTD.), and 2 parts by mass of a master batch of an expanding agent (content of an expanding agent: 20% by mass) were mixed to prepare a resin composition for an intermediate layer.

Further, 15 parts by mass of a styrene-ethylene-propylene-styrene block copolymer (HYBRAR KL7350, manufactured by Kuraray Co. Ltd., and referred to as SEPS in the tables), 25 parts by mass of polypropylene prepared by using a metallocene catalyst (trade name of WINTEC WFX-4T, manufactured by Japan Polypropylene Corporation, and referred to as PP in the tables), and 60 parts by mass of a styrene-butadiene-styrene block copolymer (trade name of CLEAREN 880L, manufactured by Denki Kagaku Kogyo Kabushiki Kaisha, and referred to as SBS in the tables) were mixed to prepare a resin composition for an outer layer.

The resin composition for an intermediate layer and the resin composition for forming an outer layer were extruded in a coextruder equipped with a T-die at 220°C, and then cooled and solidified by a cooling roll at 40°C to prepare a laminate including a first layer to serve as the intermediate layer, and second layers disposed on both sides of the first layer to serve as the outer layers.

Next, the laminate was stretched 5 times in a horizontal direction by a tenter at 80°C, and subsequently relaxed to 5% in the width direction in the same tenter. Then, the laminate was annealed at 75°C over 5 seconds to obtain a heat shrinkable multi-layer film having a thickness of 150 µm, and an expansion ratio of the intermediate layer of 1.5 times. The thickness of each of the layers is as follows: outer layer/intermediate layer/outer layer = 10 µm/130 µm/10 µm.

The solvent sealability, the solvent resistance, the adhesion strength between the intermediate layer and the outer layer, and the heat shrinkability of the obtained heat shrinkable multi-layer film were evaluated as follows. The results are shown in Table 1.

### (SOLVENT SEALABILITY)

First, two sheets of heat shrinkable multi-layer films were prepared. A felt having a width of 10 mm was held on a tip of a syringe filled with a solvent, and the solvent was supplied by the syringe, and thus penetrated into the felt.

Next, the felt penetrated with the solvent was brought into contact with one end of a heat shrinkable multi-layer film in a TD direction, and the solvent was applied. Onto the part applied with the solvent, one end of the other heat shrinkable multi-layer film in a TD direction was overlaid, and then left to stand at 23°C for 1 day. Then, the film was cut to a width of 25 mm to prepare a specimen, and the specimen was used for 180-degree peeling test at a pulling rate of 50 mm/min, thereby measuring a peeling strength. In the measurement, those having a peel strength of 35 g or greater were given an A rank, and those having a peel strength of less than 35 g were given a B rank.

In addition, the solvent sealing was carried out using a mixed solvent of cyclohexane/ethyl acetate/tetrahydrofuran as the solvent.

### (SOLVENT RESISTANCE)

A heat shrinkable film having a width in an MD direction of 25 mm was held between a pair of chucks with a chuck-to-chuck distance of 50 mm in the stretched state. Then, a mixed solvent of isopropanol/ethyl acetate was applied onto the heat shrinkable film, and the state of the heat shrinkable film surface was observed with naked eyes for evaluation. Those which did not exhibit surface changes such as fine cracks were given an A rank, and those which exhibited surface changes were given a B rank.

### (ADHESION STRENGTH BETWEEN INTERMEDIATE LAYER AND OUTER LAYER)

A Cellophane tape (trade name, No. 405, manufactured by Nichiban Co., Ltd.) was adhered on both sides of the heat shrinkable film, and then the tape was peeled off. At this time, those in which the intermediate layer and the outer layer are not completely peeled off were given an A rank, and those in which the intermediate layer and the outer layer are completely peeled off with no resistance were given a B rank.

### (HEAT SHRINKABILITY)

A heat shrinkable film that had been cut to a size of 10 cm x 10 cm was immersed in a hot water bath at 100°C for 30 seconds, and then taken out. After that, the shrinkage rates in horizontal and vertical directions were measured. Those giving the shrinkage rate of 15% or more were given an A rank, and those giving the shrinkage rate of less than 15% were given a B rank.

### (COMPATIBILITY)

Mono-layer films each having a thickness of 20 µm were prepared by extrusion molding using a resin composition for forming an outer layer, respectively. The resistivity at the time of tearing this mono-layer film in a vertical direction was used for evaluation. Those which could not be easily torn were given an A rank, and those which could be easily torn were given a B rank. Note that the films having low compatibility are low in strength or the like, and thus have insufficient practical applicability.

**Table 1**

| Example Nos. | 1 | 2 | 3 | 4 | 5 | 6 |
|---|---|---|---|---|---|---|
| SEPS | 15 | 20 | 10 | 20 | 30 | 40 |
| PP | 25 | 40 | 30 | | | |
| SBS | 60 | 40 | 60 | 50 | 40 | 30 |
| Solvent sealability | A | A | A | A | A | A |
| Solvent resistance | A | A | A | A | A | A |
| Adhesion strength | A | A | A | A | A | A |
| Heat shrinkability | A | A | A | A | A | A |
| Compatibility | A | A | A | A | A | A |

### (Examples 2 to 17 and Comparative Examples 1 to 5)

Heat shrinkable multi-layer films were prepared in the same manner as in Example 1, except that the blending ratios of the resin compositions for forming an outer layer were changed as shown in Tables 1 to 4. Evaluations were made in the same manner as in Example 1. The evaluation results are shown in Tables 1 to 4.

Note that the terms MAA-ST and SEBS in the tables refer to a methacrylic acid-styrene copolymer and a styrene-ethylene-butylene-styrene block copolymer.

**Table 2**

| Example Nos. | 7 | 8 | 9 | 10 | 11 | 12 | 13 | 14 |
|---|---|---|---|---|---|---|---|---|
| SEPS | 10 | - | 10 | - | 20 | - | 20 | - |
| SEBS | - | 10 | - | 10 | - | 20 | - | 20 |
| PP | 30 | | | | | | | |
| SBS | 50 | 50 | 40 | 40 | 30 | 30 | 40 | 40 |
| MAA-ST | 10 | 10 | 20 | | | | 10 | 10 |
| Solvent sealability | A | A | A | A | A | A | A | A |
| Solvent resistance | A | A | A | A | A | A | A | A |
| Adhesion strength | A | A | A | A | A | A | A | A |
| Heat shrinkability | A | A | A | A | A | A | A | A |
| Compatibility | A | A | A | A | A | A | A | A |

**Table 3**

| Example Nos. | 15 | 16 | 17 |
|---|---|---|---|
| SEPS | 5 | 10 | - |
| SEBS | - | - | 15 |
| PP | 25 | 25 | 25 |
| SBS | 70 | 65 | 60 |
| Solvent sealability | A | A | A |
| Solvent resistance | A | A | A |
| Adhesion strength | A | A | A |
| Heat shrinkability | A | A | A |
| Compatibility | A | A | A |

**Table 4**

| Comparative Example Nos. | 1 | 2 | 3 | 4 | 5 |
|---|---|---|---|---|---|
| PP | 100 | 75 | 50 | 25 | - |
| SBS | - | 25 | 50 | 75 | 100 |
| Solvent sealability | B | B | A | A | A |
| Solvent resistance | A | A | A | A | B |
| Adhesion strength | A | A | A | A | B |
| Heat shrinkability | B | B | A | A | A |
| Compatibility | - | B | B | B | - |

The heat shrinkable multi-layer films of Examples 1 to 17 each including the intermediate layer containing polypropylene and the outer layers containing a specific resin, were excellent in all of solvent sealability, solvent resistance, adhesiveness, and heat shrinkability.

The heat shrinkable multi-layer film of Comparative Example 1, which includes outer layers containing only polypropylene, was poor in solvent sealability and heat shrinkability.

The heat shrinkable multi-layer films of Comparative Examples 2 to 4, each including a styrene-butadiene-styrene block copolymer and polypropylene but no styrene-ethylene-propylene-styrene block copolymer, were poor in compatibility with a styrene-butadiene-styrene block copolymer and polypropylene. In addition, the heat shrinkable multi-layer film of Comparative Example 2, which had a content of the styrene-butadiene-styrene block copolymer of 25% by mass, was poor in solvent sealability and heat shrinkability.

The heat shrinkable multi-layer film of Comparative Example 5, which included outer layers containing only a styrene-butadiene-styrene block copolymer, was poor in solvent resistance and adhesion strength.

## Claims

1. A heat shrinkable multi-layer film comprising an intermediate layer containing polypropylene, and outer layers formed on both sides of the intermediate layer,
wherein the outer layers contain i) a styrene-butadiene-styrene block copolymer, ii) polypropylene, and iii) a styrene-ethylene-propylene-styrene block copolymer or styrene-ethylene-butylene-styrene block copolymer.

2. The heat shrinkable multi-layer film according to claim 1, wherein the intermediate layer is an expanded layer.

3. A method for preparing a heat shrinkable multi-layer film, comprising:
forming a laminate including a first layer and second layers disposed on both sides of the first layer, by coextrusion; and
stretching the laminate,
wherein the first layer is formed of a resin composition for forming an intermediate layer containing polypropylene, and
the second layers are formed of a resin composition for forming an outer layer containing i) a styrene-butadiene-styrene block copolymer, ii) polypropylene, and iii) as styrene-ethylene-propylene-styrene block copolymer or
styrene-ethylene-butylene-styrene block copolymer.

## Patentansprüche

1. Wärmeschrumpfbare Mehrschichtfolie, die eine Polypropylen enthaltende Zwischenschicht und Außenschichten aufweist, die an beiden Seiten der Zwischenschicht gebildet sind,
wobei die Außenschichten Folgendes enthalten: i) ein Styrol-Butadien-Styrol-Blockcopolymer, ii) Polypropylen und iii) ein Styrol-Ethylen-Propylen-Styrol-Blockcopolymer oder Styrol-Ethylen-Butylen-Styrol-Blockcopolymer.

2. Wärmeschrumpfbare Mehrschichtfolie nach Anspruch 1, wobei die Zwischenschicht eine expandierte Schicht ist.

3. Verfahren zum Herstellen einer wärmeschrumpfbaren Mehrschichtfolie, wobei das Verfahren die folgenden Schritte aufweist:
Bilden eines Laminats durch Coextrusion, das eine erste Schicht und zweite Schichten aufweist, die an beiden Seiten der ersten Schicht angeordnet sind; und
Strecken des Laminats,
wobei die erste Schicht aus einer Harzzusammensetzung zum Bilden einer Polypropylen enthaltenden Zwischenschicht gebildet ist, und
die zweiten Schichten aus einer Harzusammensetzung zum Bilden einer Außenschicht gebildet sind, die i) ein Styrol-Butadien-Styrol-Blockcopolymer, ii) Polypropylen und iii) ein Styrol-Ethylen-Propylen-Styrol-Blockcopolymer oder Styrol-Ethylen-Butylen-Styrol-Blockcopolymer enthält.

## Revendications

1. Film multicouche thermorétrécissable comprenant une couche intermédiaire contenant du polypropylène, et des couches externes de chaque côté de la couche intermédiaire, dans lequel les couches externes contiennent :
i) un copolymère à blocs de styrène-butadiène-styrène,
ii) du polypropylène, et
iii) un copolymère à blocs de styrène-éthylène-propylène-styrène ou un copolymère à blocs de styrène-éthylène-butylène-styrène

2. Film multicouche thermorétrécissable selon la revendication 1, dans lequel la couche intermédiaire est une couche expansée.

3. Méthode pour préparer un film multicouche thermorétrécissable, comprenant :
■ l'assemblage par laminage d'une première couche et de couches secondaires déposées par coextrusion de chaque côté de la première couche ; et
■ l'étirage de la couche laminée, dans laquelle la première couche est composée d'un mélange de résines contenant du polypropylène pour former une couche intermédiaire, et les couches secondaires sont composées d'un mélange de résines contenant i) un copolymère à blocs de styrène-butadiène-styrène, ii) du polypropylène, et iii) un copolymère à blocs de styrène-éthylène-propylène-styrène ou un copolymère à blocs de styrène-éthylène-butylène-styrène pour former une couche externe.
